# EUROPEAN PATENT APPLICATION

(11) **EP 4 068 661 A1**
(43) Date of publication of application: **05.10.2022**
(21) Application number: 20902855.4
(22) Date of filing: 18.12.2020
(51) Int. Cl.: H04L 1/00

(54) **DATA TRANSMISSION METHOD AND APPARATUS**

(30) Priority: 18.12.2019 CN 201911311916
(71) Applicant: Huawei Technologies Co., Ltd., Shenzhen, Guangdong 518129 (CN)
(72) Inventor: XIANG, Junling, Shenzhen, Guangdong 518129 (CN); YANG, Hong, Shenzhen, Guangdong 518129 (CN); CHANG, Tianhai, Shenzhen, Guangdong 518129 (CN)
(74) Representative: Maiwald Patent- und Rechtsanwaltsgesellschaft mbH
(86) International application number: PCT/CN2020/137432
(87) International publication number: WO 2021/121352

(57) **Abstract**

This application provides a data transmission method and an apparatus. Data blocks and alignment code blocks are transmitted through a plurality of paths. The data blocks are aligned by using the alignment code blocks, to improve data transmission reliability, avoid data transmission interruption caused due to a link failure, and improve data transmission efficiency. The method includes: First, a transmit device obtains a plurality of data blocks; then, generates check information based on the plurality of data blocks; and sends the plurality of data blocks, the check information, and a plurality of first alignment code blocks to a receive device. The plurality of data blocks are distributed to a plurality of first paths. The check information is used to restore the plurality of data blocks. The plurality of first alignment code blocks are used to align the plurality of data blocks.

## Description

This application claims priority to Chinese Patent Application No. 201911311916.8, filed with the China National Intellectual Property Administration on December 18, 2019 and entitled "DATA TRANSMISSION METHOD AND APPARATUS", which is incorporated herein by reference in its entirety.

### TECHNICAL FIELD

This application relates to the communications field, and in particular, to a data transmission method and an apparatus.

### BACKGROUND

In the field of communications technologies, to provide a stable and reliable end-to-end communication service, reliability of a communications channel needs to be improved, thereby reducing a failure rate of the communications channel. However, there are many unavoidable interference factors in an actual communication environment. For example, an optical fiber breakage, an excessively large optical loss, and optical signal interference in optical communication all have impact of a small quantity of bit errors, a large quantity of bit errors, and even a channel failure on the communications channel. Therefore, how to reduce or avoid impact from various interference factors on the communications channel is an important problem that needs to be resolved.

In an existing solution, to improve reliability of data transmission, there are a plurality of paths between a transmit device and a receive device. Data may be simultaneously transmitted through the plurality of paths. Data transmission is performed in a unit of a data block. When transmitting a data block, the transmit device flips a frame header to ensure frame header transmission on each path, so that the receive device can align data blocks based on frame headers. However, a method of flipping a frame header of a data block and then distributing the data block to each path is relatively complex.

### SUMMARY

This application provides a data transmission method and an apparatus. Data blocks and alignment code blocks are transmitted through a plurality of paths. The data blocks are aligned by using the alignment code blocks, to improve data transmission reliability, avoid data transmission interruption caused due to a link failure, and improve data transmission efficiency.

According to a first aspect, this application provides a data transmission method. The method includes: First, a transmit device obtains a plurality of data blocks; then, generates check information based on the plurality of data blocks; and sends the plurality of data blocks, the check information, and a plurality of first alignment code blocks to a receive device. The plurality of data blocks are distributed to a plurality of first paths. The check information is used to restore the plurality of data blocks. The plurality of first alignment code blocks are used to align the plurality of data blocks.

In this implementation, the transmit device sends the plurality of data blocks and the plurality of first alignment code blocks to the receive device through the plurality of first paths, so that the receive device can align the plurality of data blocks based on the received first alignment code blocks. The transmit device can implement alignment of a plurality of data blocks without flipping a frame header, to reduce processing complexity of the transmit device. In this embodiment, a newly added alignment code block is transmitted on a path. A quantity of transmitted alignment code blocks is not limited. Therefore, a quantity of transmission paths for transmitting data is not limited.

Based on the first aspect of this application, the following describes some optional implementations of the first aspect of this application.

In a possible implementation, that the transmit device sends a plurality of first alignment code blocks to a receive device includes: The transmit device sends the first alignment code blocks at intervals of a preset quantity of data blocks on each of the plurality of first paths.

In a possible implementation, that the transmit device sends the first alignment code blocks at intervals of a preset quantity of data blocks on each of the plurality of first paths includes: The transmit device sends the first alignment code blocks at intervals of data blocks corresponding to one or more frames on each of the plurality of first paths. In this implementation, the receive device may align one or more frames based on the first alignment code blocks, so that the receive device can more accurately distinguish data blocks of one or more frames, to improve alignment efficiency of the receive device.

In a possible implementation, that a transmit device obtains a plurality of data blocks includes: The transmit device receives a first data flow. A format of the first data flow is an optical channel data unit (optical channel data unit, ODU) frame format, a synchronous digital hierarchy (synchronous digital hierarchy, SDH) frame format, or a passive optical network (passive optical network, PON) frame format. The transmit device splits the received first data flow to obtain the plurality of data blocks. Each of the plurality of data blocks has the same length. In this implementation, splitting of a plurality of frame formats is implemented, to implement reliable transmission of a plurality of frames.

In a possible implementation, that a transmit device obtains a plurality of data blocks includes: The transmit device receives a second data flow. The second data flow includes the plurality of data blocks. Each of the plurality of data blocks has the same length. In this implementation, the transmit device may directly determine a plurality of data blocks from the second data flow. Splitting does not need to be performed, to reduce a workload of the transmit device.

In a possible implementation, a length of each of the plurality of data blocks is 16B, 32B, 64B, 128B, 192B, 256B, 384B, 66B, 257B, or 513B. In this implementation, a plurality of lengths of data blocks are provided, so that data blocks can be transmitted in more scenarios.

In a possible implementation, the method further includes: The transmit device generates at least one padding block. The transmit device adds the at least one padding block to the plurality of data blocks. In this implementation, the padding block may be used to fill a volume of data transmitted on the first path, to balance the data transmitted on the plurality of first paths and implement adaptation to a rate in a transmission network, thereby improving data transmission stability.

In a possible implementation, that the transmit device sends the check information to a receive device includes: The transmit device sends the check information to the receive device through at least one of the plurality of first paths. Alternatively, the transmit device sends the check information to the receive device through at least one second path. In this implementation, the transmit device may send the check information through the first path, or may send the check information through the second path. A plurality of transmission manners of the check information are provided.

In a possible implementation, the method further includes: If the transmit device sends the check information to the receive device through the at least one of the plurality of first paths, the transmit device sends at least one second alignment code block to the receive device through the at least one first path. Alternatively, if the transmit device sends the check information to the receive device through the at least one second path, the transmit device sends at least one second alignment code block to the receive device through each of the at least one second path. The at least one second alignment code block is used to align the check information. In this implementation, the transmit device further sends the second alignment code block to the receive device, to align the check information. In this way, the receive device can align the check information based on the received second alignment code block.

According to a second aspect, this application provides a data transmission method. The data transmission method includes: A receive device receives reception data and check information that are sent by a transmit device. The reception data includes a plurality of first alignment code blocks. The receive device obtains a plurality of data blocks from the reception data based on the plurality of first alignment code blocks. The check information is used to restore the plurality of data blocks.

In this implementation, after receiving the reception data, the receive device may use the first alignment code blocks to align the reception data, to obtain the plurality of data blocks, thereby more accurately aligning the data blocks. In addition, the transmit device further sends the check information to restore the plurality of data blocks. Therefore, even if data is lost, the check information may be used for restoration, to improve data transmission reliability.

Based on the second aspect, the following describes some optional implementations of the second aspect.

In a possible implementation, the method further includes: If the receive device determines that a data loss exists in the plurality of data blocks, the receive device restores the plurality of data blocks based on the check information to obtain restored data. In this implementation, even if the data loss exists in the plurality of data blocks, the receive device may restore the plurality of data blocks based on the check information to obtain the restored data, to improve data transmission reliability and avoid interruption in data transmission.

In a possible implementation, the reception data is sent by the transmit device through a plurality of first paths. The first alignment code blocks are transmitted at intervals of a preset quantity of data blocks on each of the plurality of first paths. In this implementation, the receive device may align the preset quantity of data blocks transmitted on each first path based on the first alignment code blocks, to align the data blocks.

In a possible implementation, the first alignment code blocks are transmitted at intervals of data blocks corresponding to one or more frames on each of the plurality of first paths. In this implementation, the receive device may align data blocks corresponding to one or more frames based on the first alignment code blocks, so that the receive device can more accurately complete alignment in a unit of one or more frames.

In a possible implementation, the plurality of data blocks are obtained by the transmit device through splitting a received first data flow. A format of the first data flow is an ODU frame format, an SDH frame format, or a PON frame format. In this implementation of this application, splitting of a plurality of frame formats is implemented, to implement reliable transmission of a plurality of frames.

In a possible implementation, the plurality of data blocks are obtained by the transmit device based on a received second data flow. The second data flow includes the plurality of data blocks. In this implementation, the transmit device may directly determine a plurality of data blocks from the second data flow. Splitting does not need to be performed, to reduce a workload of the transmit device.

In a possible implementation, a length of each of the plurality of data blocks is 16B, 32B, 64B, 128B, 192B, 256B, 384B, 66B, 257B, or 513B. In this implementation, a plurality of lengths of data blocks are provided, so that data blocks can be transmitted in more scenarios.

In a possible implementation, the receive device determines a padding block from the reception data. The padding block is used to fill a volume of data transmitted on the plurality of first paths. In this implementation, the padding block may be used to fill the volume of the data transmitted on the first path, to balance the data transmitted on the plurality of first paths and implement adaptation to a rate in a transmission network, thereby improving data transmission stability.

In a possible implementation, that a receive device receives check information sent by a transmit device includes: The receive device receives the check information through at least one of the plurality of first paths or at least one second path. The receive device aligns the check information by using at least one second alignment code block to obtain the check information. In this implementation, the receive device may receive the check information through the first path, or may receive the check information through the second path. A plurality of transmission manners of the check information are provided.

In a possible implementation, the method further includes: If the receive device receives the check information through the at least one of the plurality of first paths, the receive device receives the at least one second alignment code block through at least one of the plurality of first paths. Alternatively, if the receive device receives the check information through the at least one second path, the receive device receives the at least one second alignment code block through the at least one second path. In this implementation, the transmit device further receives the second alignment code block, and aligns the check information by using the second alignment code block.

According to a third aspect, an embodiment of this application provides a transmit device, including a processor, a memory, and a transceiver. The processor, the memory, and the transceiver are interconnected through a line. The processor invokes program code in the memory to perform a function related to processing in the data transmission method shown in any implementation of the first aspect. The transceiver is configured to perform a function related to transmission/reception in the data transmission method shown in any implementation of the first aspect.

According to a fourth aspect, an embodiment of this application provides a receive device, including a processor, a memory, and a transceiver. The processor, the memory, and the transceiver are interconnected through a line. The processor invokes program code in the memory to perform a function related to processing in the data transmission method shown in any implementation of the second aspect. The transceiver is configured to perform a function related to transmission/reception in the data transmission method shown in any implementation of the second aspect.

According to a fifth aspect, an embodiment of this application provides a digital processing chip. The chip includes a processor and a memory. The memory and the processor are interconnected through a line. The memory stores instructions. The processor is configured to perform a function related to processing in the data transmission method in any implementation of the first aspect and the second aspect.

According to a sixth aspect, an embodiment of this application provides a data transmission system. The communications system includes a transmit device and a receive device. The transmit device is shown in the third aspect. The receive device is shown in the fourth aspect.

According to a seventh aspect, an embodiment of this application provides a computer-readable storage medium including instructions. When the instructions are run on a computer, the computer is enabled to perform the data transmission method in any implementation of the first aspect and the second aspect.

According to an eighth aspect, an embodiment of this application provides a computer program product including instructions. When the computer program product runs on a computer, the computer is enabled to perform the data transmission method in any implementation of the first aspect and the second aspect.

### BRIEF DESCRIPTION OF DRAWINGS

FIG. 1A is a schematic diagram of an architecture of a communications system according to this application;
FIG. 1B is a schematic diagram of an architecture of another communications system according to this application;
FIG. 2 is a schematic flowchart of a data transmission method according to this application;
FIG. 3A and FIG. 3B are a schematic flowchart of another data transmission method according to this application;
FIG. 4 is a schematic diagram of a structure of a frame according to this application;
FIG. 5A is a schematic diagram of a distribution manner of a data block according to this application;
FIG. 5B is a schematic diagram of another distribution manner of a data block according to this application;
FIG. 6 is a schematic diagram of a distribution manner of a padding block according to this application;
FIG. 7 is a schematic diagram of a structure of another frame according to this application;
FIG. 8 is a schematic diagram of a distribution manner of a data block according to this application;
FIG. 9 is a schematic diagram of a structure of an alignment code block according to this application;
FIG. 10 is a schematic diagram of another distribution manner of check information according to this application;
FIG. 11 is a schematic diagram of a structure of a transmit device or a receive device according to this application; and
FIG. 12 is a schematic diagram of another structure of a transmit device or a receive device according to this application.

### DESCRIPTION OF EMBODIMENTS

The following clearly and completely describes the technical solutions in the embodiments of the present invention with reference to the accompanying drawings in the embodiments of the present invention. It is clear that the described embodiments are merely some but not all of the embodiments of the present invention. All other embodiments obtained by a person skilled in the art based on the embodiments of the present invention without creative efforts shall fall within the protection scope of the present invention.

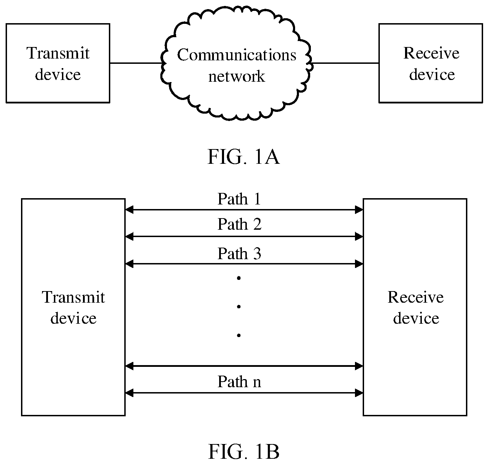

With reference to FIG. 1A, a communications system provided in this application is first described. The communications system may include a transmit device and a receive device. The transmit device and the receive device may be connected by using a communications network. A plurality of paths may be established between the transmit device and the receive device by using the communications network. Data is transmitted through the plurality of paths.

The communications network may include a network, for example, an optical transport network (optical transport network, OTN), a synchronous digital hierarchy (synchronous digital hierarchy, SDH), a passive optical network (passive optical network, PON), an Ethernet (Ethernet), or a flex Ethernet (flex Ethernet, FlexE).

Correspondingly, the transmit device or the receive device may be a connection-oriented device for accessing a network, for example, an OTN, a PON, an SDH, an Ethernet, or a FlexE.

For example, the communications system provided in this application may be specifically shown in FIG. 1B. There are n paths (that is, for example, a path 1, a path 2, a path 3, ..., and a path n shown in FIG. 1B) between the transmit device and the receive device. Herein, n is a positive integer greater than 1. The n paths may be used to transmit data between the transmit device and the receive device.

When data is transmitted between the transmit device and the receive device through the plurality of paths, the transmit device flips a frame header to ensure that each path has a frame header. This processing method is complex. In addition, when data is transmitted between the transmit device and the receive device, some paths may be faulty, and consequently, data transmission is interrupted.

Therefore, this application provides a data transmission method. A plurality of first alignment identifiers are transmitted to align a plurality of data blocks transmitted on the plurality of paths. In addition, data is transmitted through the plurality of paths. Even if some paths are faulty, other paths may continue to transmit data, to avoid interruption in data transmission. The following describes in detail the data transmission method provided in this application based on the communications system in FIG. 1A and FIG. 1B. The transmit device in FIG. 1A and FIG. 1B is configured to perform steps performed by the transmit device in the following embodiments of this application. The receive device in FIG. 1A and FIG. 1B is configured to perform steps performed by the receive device in the following embodiments of this application.

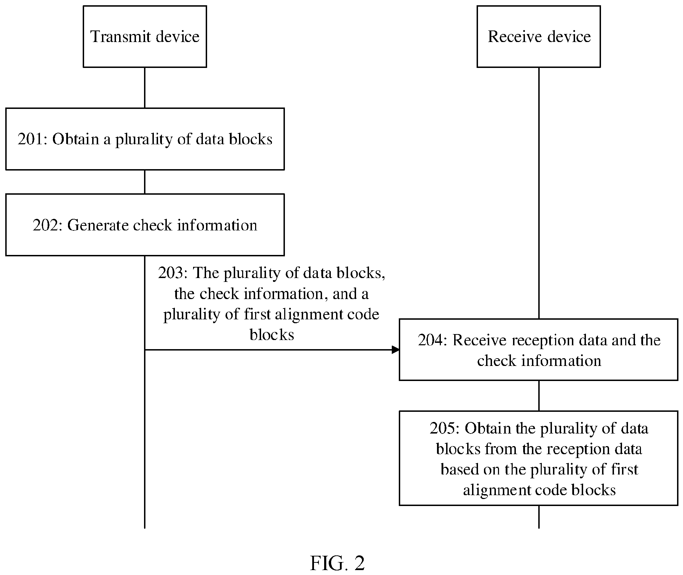

FIG. 2 is a schematic diagram of an embodiment of a data transmission method according to this application. As shown in FIG. 2, the method includes the following steps.

201: A transmit device obtains a plurality of data blocks.

Each of the plurality of data blocks may have the same length. Specifically, the length of each data block may be 16 bytes (Byte, B for short), 32B, 64B, 128B, 192B, 256B, 384B, 66B, 257B, 513B, or the like.

There are a plurality of manners in which the transmit device obtains the plurality of data blocks that need to be sent to the receive device. The following separately describes the plurality of manners.

In a possible implementation, the transmit device may split received data to obtain the plurality of data blocks. Specifically, the transmit device may receive a first data flow sent by another device, and split the received first data flow to obtain the plurality of data blocks.

The first data flow may be a data flow in a format such as an optical channel data unit (optical channel data unit, ODU) frame format, an SDH frame format, or a PON frame format. In other words, the first data flow may also include a data flow such as an ODU frame, an SDH frame, or a PON frame. For example, the first data flow may be a data flow of an ODUk frame or an ODUflex frame.

Further, after a volume of data of the first data flow received by the transmit device exceeds a preset value, the transmit device may split the received data to obtain the plurality of data blocks. Generally, the transmit device may receive a part of data of one frame, and then split the received data to obtain the plurality of data blocks. There is no need to wait for receiving one complete frame for splitting. In this way, a volume of cached data can be reduced, and the received data is split in time, thereby improving efficiency of sending data by the transmit device. Certainly, the transmit device may also split the received data after receiving one complete frame or a plurality of frames. In addition, splitting may be specifically performed in a unit of a preset length of bytes. For example, one or more locally stored frames or the received first data flow may be split in a unit of 16B, 32B, 64B, 128B, 192B, 256B, or 384B.

In another possible implementation, the transmit device may split the one or more locally stored frames to obtain the plurality of data blocks.

In still another possible implementation, the transmit device may receive a second data flow including a plurality of data blocks, and extract the plurality of data blocks from the second data flow. For example, the second data flow may be a data flow corresponding to an Ethernet frame or a FlexE frame. The second data flow is formed in a unit of a data block with a length such as 66B, 257B, or 513B. Alternatively, the second data flow may be a cell flow with a fixed length. A length of each cell is 192B, 256B, 384B, or the like.

In another case, the transmit device may alternatively directly obtain locally stored data to obtain the plurality of data blocks. For example, the transmit device may receive a plurality of data blocks of a FlexE frame sent by another device, and locally cache the plurality of data blocks. Before the transmit device needs to send the plurality of data blocks to the receive device, the transmit device may directly extract the plurality of data blocks from the locally cached data.

202: The transmit device generates check information.

After obtaining the plurality of data blocks, the transmit device generates the check information based on the plurality of data blocks. The check information is associated with the plurality of data blocks. The check information is used to restore the plurality of data blocks.

Specifically, step 202 may include: performing calculation on the plurality of data blocks based on a preset algorithm to obtain a plurality of check blocks. Two data blocks are used as an example. An exclusive OR operation may be performed on the two data blocks to generate one check block. When one of the two data blocks is lost, a restoration operation may be performed by using the check block and a data block that is not lost, to obtain two complete data blocks. Four data blocks are used as an example. The transmit device may perform Reed-Solomon (Reed-Solomon, RS) coding on the four data blocks. A coding matrix is a Cauchy matrix. The four data blocks obtained after the coding form one vector. The vector is multiplied by a preset generator matrix to obtain seven blocks. Three blocks are check blocks. For example, when the receive device determines that one of the data blocks is lost, the receive device deletes a row corresponding to the lost data block from the coding matrix, and then calculates an inverse matrix of the coding matrix. Four complete data blocks may be obtained through multiplying the inverse matrix by the received data blocks and the remaining two check blocks.

203: The transmit device sends the plurality of data blocks, the check information, and a plurality of first alignment code blocks to the receive device.

After obtaining the plurality of data blocks, the transmit device distributes the plurality of data blocks to the plurality of first paths, and sends the plurality of data blocks, the check information, and the plurality of first alignment code blocks to the receive device through the plurality of first paths. The plurality of first alignment code blocks are used to align the plurality of data blocks.

The following separately describes manners of sending the plurality of data blocks, the check information, and the plurality of first alignment code blocks.
1. A manner in which the transmit device sends the plurality of data blocks may include: The transmit device separately distributes the plurality of data blocks to the plurality of paths, and then maps the plurality of data blocks to corresponding paths for transmission.

That the transmit device separately distributes the plurality of data blocks to the plurality of paths may include but is not limited to the following manners.
1. If the plurality of data blocks can be evenly distributed to the plurality of first paths, the transmit device evenly distributes the plurality of data blocks to the plurality of first paths, so that quantities of data blocks transmitted on the first paths are the same.
2. When data blocks corresponding to one frame cannot be evenly distributed to the plurality of first paths, data blocks corresponding to a plurality of frames may be evenly distributed to the plurality of first paths. For example, one frame may include seven data blocks that cannot be evenly distributed to four first paths. In this case, 28 data blocks corresponding to four frames can be evenly distributed to four first paths. Therefore, the 28 data blocks corresponding to the four frames can be evenly distributed to the four first paths. The four frames may form one multiframe.
3. When the plurality of data blocks obtained by the transmit device cannot be evenly distributed to the plurality of first paths, the transmit device may generate at least one padding block, and add the padding block to the plurality of data blocks. For example, when the transmit device obtains only seven data blocks that cannot be evenly distributed to five first paths, the transmit device may generate three padding blocks to obtain seven data blocks and three padding blocks. The seven data blocks and the three padding blocks can be evenly distributed to five first paths.

2. A manner in which the transmit device sends the plurality of first alignment code blocks may include: The transmit device sends the one or more first alignment code blocks at intervals of a preset quantity of data blocks on each of the plurality of first paths.

Further, the transmit device may send the one or more first alignment code blocks at intervals of data blocks corresponding to one or more frames on each first path.

The first alignment code block may be a code block in a first preset format. Alternatively, the first alignment code block may include a preset alignment identifier. The alignment identifier is used to identify a code block as an alignment code block. In this way, the receive device can identify the first alignment code blocks from reception data, and align the data blocks by using the first alignment code blocks.

In this embodiment, the one or more first alignment code blocks are transmitted at intervals of data blocks corresponding to one or more frames on each first path, so that the receive device can align the data blocks of the one or more frames based on the first alignment code blocks, to accurately distinguish the data blocks corresponding to the one or more frames. There is no need to align data blocks based on a frame header transmitted on each path, thereby reducing alignment complexity of the data blocks. In addition, it is assumed that a frame header is flipped to ensure that each path has a frame header to be transmitted. A quantity of frame headers is limited. Generally, one frame has one frame header. In this case, a quantity of transmission paths is limited because the quantity of frame headers is limited. In this embodiment, a newly added alignment code block is transmitted on a path. A quantity of transmitted alignment code blocks is not limited. Therefore, the quantity of transmission paths for transmitting data is not limited.

3. A manner in which the transmit device sends the check information to the receive device may specifically include: The transmit device sends the check information to the receive device through at least one of the plurality of first paths. Alternatively, the transmit device sends the check information to the receive device through at least one second path. Alternatively, the check information may be further transmitted on the first path and the second path.

If the transmit device sends the check information to the receive device through the at least one first path, the transmit device may select one or more of the plurality of first paths to send the check information, and keep the same volume of data transmitted on each first path. It should be noted that a transmission path of the check block is not limited in this application. The transmission path may be specifically adjusted according to an actual application scenario. The following is merely an example description instead of limitation.

If the transmit device sends the check information to the receive device through the at least one first path, the transmit device may further send at least one second alignment code block on the at least one first path. The at least one second alignment code block is used to align the check information.

If the transmit device sends the check information to the receive device through the at least one second path, the transmit device may further send at least one second alignment code block on the at least one second path.

Specifically, the second alignment code block may be a code block in a second preset format. Alternatively, the second alignment code block may include a preset alignment identifier. The alignment identifier is used to identify a code block as an alignment code block. In this way, the receive device can identify the second alignment code block from the reception data, and align the check information by using the second alignment code block.

The second alignment code block may be the same as or different from the first alignment code block. For example, the second preset format and the first preset format may be the same format. For example, the two alignment code blocks are distinguished by using alignment identifiers.

204: The receive device receives reception data and the check information that are sent by the transmit device.

The receive device receives the reception data through the plurality of first paths. The reception data is sent to the receive device by the transmit device through the plurality of first paths. The receive device may receive the check information through the one or more first paths, or may receive the check information through one or more second paths.

The receive device further receives the at least one second alignment code block. The at least one second alignment code block is used to align the plurality of check blocks of the check information. Specifically, a manner in which the receive device receives the at least one second alignment code block may include: The receive device receives the at least one second alignment code block through the at least one first path, or receives the at least one second alignment code block through the at least one second path.

Further, if the check information can be received through the at least one first path, the second alignment code block may be received at intervals of a preset quantity of blocks (which may be data blocks and/or check blocks) on the at least one first path. If the check information can be received through the at least one second path, the second alignment code block may be received at intervals of a preset quantity of check blocks on each second path.

205: The receive device obtains the plurality of data blocks from the reception data based on the plurality of first alignment code blocks.

After receiving the reception data, the receive device identifies the first alignment code blocks in the reception data, and aligns the reception data based on the first alignment code blocks to obtain the plurality of data blocks.

Specifically, the first alignment code block may be a code block in the first preset format, or may be a code block including a preset alignment identifier. Correspondingly, the receive device may identify the code blocks whose format is the first preset format in the reception data, or identify the code blocks that carry the preset alignment identifiers in the reception data, to obtain the plurality of first code blocks. Further, the reception data is aligned based on the plurality of first code blocks to obtain the plurality of data blocks.

In a possible scenario, the receive device further receives the at least one second alignment code block, and aligns the check information based on the at least one second alignment code block.

In a possible scenario, it is assumed that the receive device detects that some paths between the receive device and the transmit device are faulty. In this case, some data is lost. Therefore, the receive device may restore the plurality of data blocks by using the received check information to obtain restored data. The restored data includes the plurality of complete data blocks after the restoration. For example, the check information is obtained through an exclusive OR operation performed on the data blocks by the transmit device. In this case, when determining that some data is lost, the receive device may perform an inverse operation on the check information and the received data blocks to obtain lost data. For another example, the transmit device performs RS coding on the data blocks, and a coding matrix is a Cauchy matrix after selection. In this case, when a data block is lost, the receive device deletes a row corresponding to the lost data block from the coding matrix, and then calculates an inverse matrix of the coding matrix. The lost data block can be obtained through multiplying the inverse matrix by the received data blocks and the check information.

In this implementation, the transmit device sends the plurality of data blocks and the plurality of first alignment code blocks to the receive device through the plurality of first paths, so that the receive device can align the plurality of data blocks based on the received first alignment code blocks. The transmit device can align a plurality of data blocks without flipping a frame header, to reduce complexity of data transmission of the transmit device and reduce limitation on the quantity of transmission paths. In addition, the transmit device further sends the check information to the receive device. When the receive device determines that a loss occurs, the plurality of data blocks can be restored by using the check information. Even if some paths are faulty, there is no need to switch a path for data transmission, thereby avoiding interruption in data transmission and improving data transmission reliability.

The foregoing describes a procedure of the data transmission method provided in this application. With reference to a specific application scenario, the following describes in more detail the data transmission method provided in this application.

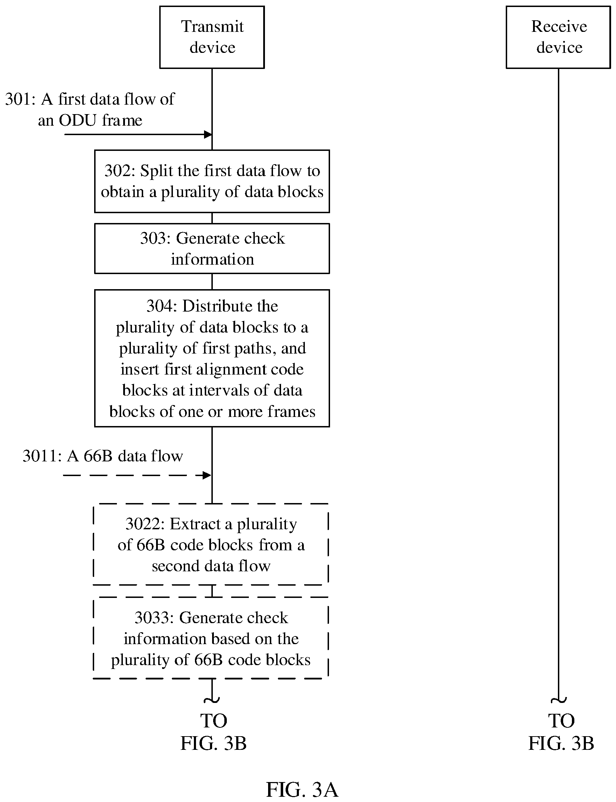

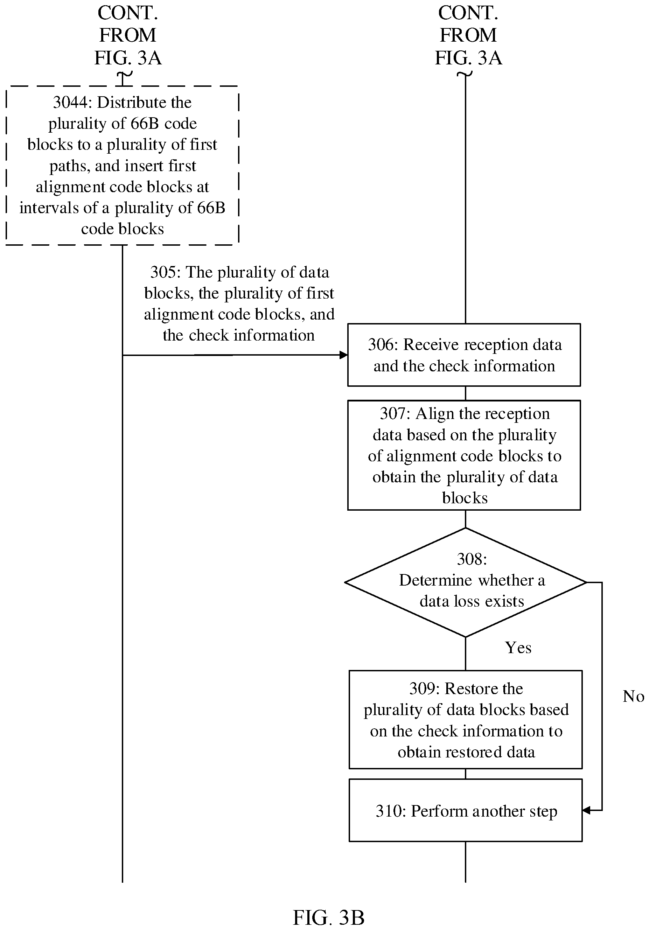

FIG. 3A and FIG. 3B are a schematic diagram of an embodiment of another data transmission method according to this application. As shown in FIG. 3A and FIG. 3B, the method includes the following steps.

301: A transmit device receives a first data flow of an ODU frame.

The transmit device may be a node in a communications network, and may receive an ODU frame that is sent by another node in a data flow form. A format of the first data flow is an ODU frame format. In other words, the first data flow is a data flow of the ODU frame. The first data flow may be specifically a data flow of an ODUk frame, or may be a data flow of an ODUflex frame. The ODUk frame is used as an example for description below.

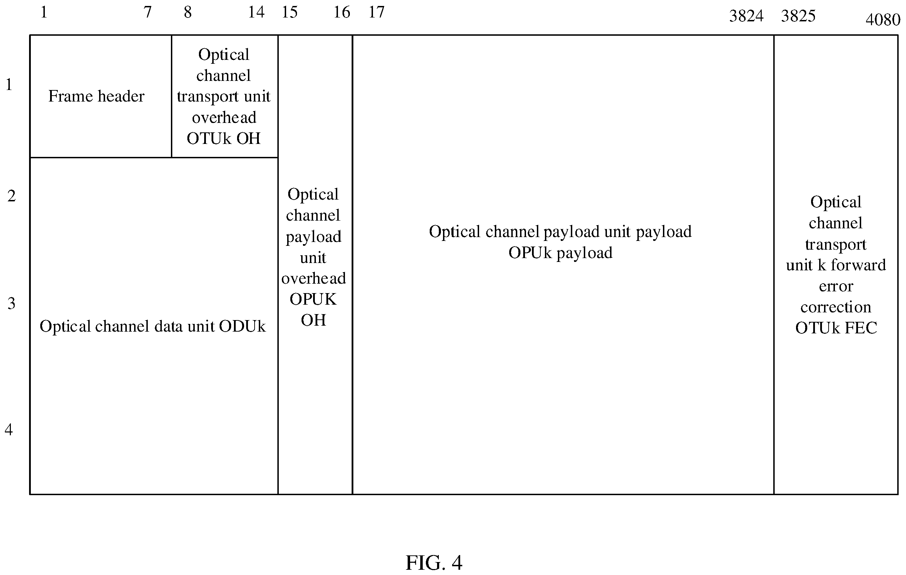

For example, the ODUk frame may be included in an OTN frame. A structure of the OTN frame is shown in FIG. 4. The OTN frame includes four rows and 4080 columns. Each column is one byte. The OTN frame may specifically include a frame header (Row 1, Columns 1 to 7), an optical channel transport unit (optical channel transport unit, OTU) overhead (overhead, OH) (Row 1, Columns 8 to 14), an optical channel payload unit (optical channel payload unit, OPU) k OH (Rows 1 to 4, Columns 15 and 16), an ODUk (Rows 2 to 4, Columns 1 to 7), an overhead (Rows 1 to 4, Columns 17 to 3824), and OTUk forward error correction (forward error correction, FEC) (Rows 1 to 4, Columns 3825 to 4080). The ODUk frame includes an ODUk, an OPUk, and an OPUk OH. In other words, Columns 1 to 3824 in the OTN frame is an ODUk frame. Herein, k indicates a rate level. For example, when k is 1, it indicates that a rate is 2.5 Gbps. When k is 2, it indicates that a rate is 10 Gbps. When k is 3, it indicates that a rate is 40 Gbps.

302: The transmit device splits the first data flow to obtain a plurality of data blocks.

Based on the foregoing structure of the ODUk frame, the first data flow is split. Specifically, the first data flow may be split based on 8B, 16B, 32B, 64B, 128B, 192B, 256B, 384B, or the like to obtain the plurality of data blocks. For example, the ODUk frame may be split in a unit of 16B. In this case, 239 data blocks may be obtained for each ODUk frame.

303: The transmit device generates check information.

Specifically, for step 303, refer to step 202. Details are not described herein again.

304: The transmit device distributes the plurality of data blocks to a plurality of first paths, and inserts first alignment code blocks at intervals of data blocks of one or more frames.

After obtaining the plurality of data blocks, the transmit device sequentially distributes the plurality of data blocks to the plurality of first paths, and inserts the first alignment code blocks at intervals of the data blocks of the one or more frames on each first path.

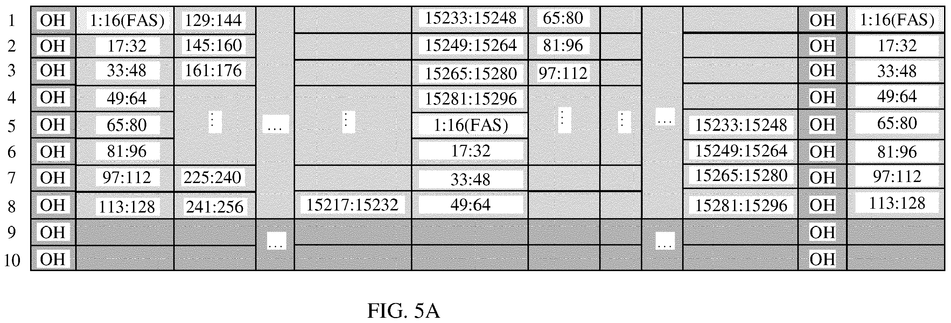

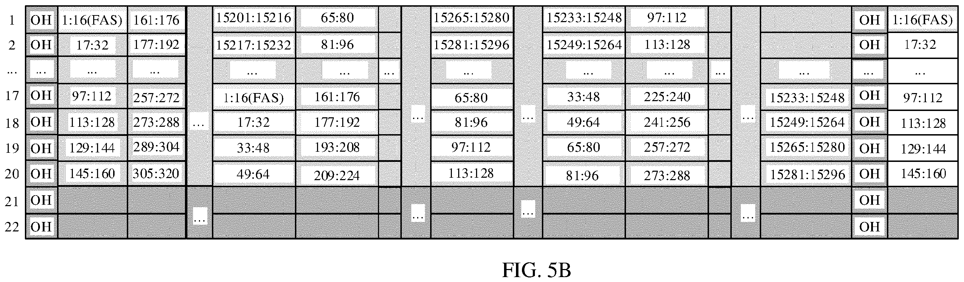

For example, a distribution manner of the plurality of data blocks is shown in FIG. 5A. The ODUk frame may be split in a unit of 16B. The plurality of data blocks obtained after the splitting are distributed to eight paths. One ODUk frame may be split to 239 data blocks. Therefore, if the data blocks need to be evenly distributed to eight paths, 239^{∗}8 data blocks are needed. In other words, data blocks corresponding to eight ODUk frames are needed to be evenly distributed to the eight paths. The eight ODUk frames may be understood as one multiframe. Correspondingly, on each path, the first alignment code blocks (OH code blocks shown in FIG. 5A) may be inserted on each path at intervals of eight ODUk frames. The OH code blocks are used to align the data blocks transmitted on the paths 1 to 8. Similarly, as shown in FIG. 5B, the ODUk frames are split in a unit of 16B. Data blocks obtained after the splitting are evenly distributed to 20 paths. The first alignment code blocks (OH code blocks shown in FIG. 5B) are inserted on each path at intervals of 20 ODUk frames. The OH code blocks are used to align the data blocks transmitted on the paths 1 to 20.

The first alignment code block may include one or more of the following: a frame alignment signal (frame alignment signal, FAS) used for data alignment performed by the receive device; a frame type identifier for identifying an ODU frame as a data frame or a check frame; an associated channel check for identifying a check manner, for example, a cyclic redundancy check (cyclic redundancy check, CRC) or a bit interleaved parity (bit interleaved parity, BIP); an operation administration and maintenance (operation administration and maintenance, OAM) overhead; and the like.

In addition, the check information may include a plurality of check blocks. The plurality of check blocks may be distributed to one or more first paths for transmission, or the plurality of check blocks may be distributed to a plurality of second paths. When the plurality of check blocks are distributed to the one or more first paths for transmission, the plurality of check blocks and the data blocks may be jointly evenly distributed to the one or more first paths, or the plurality of check blocks may be directly evenly or unevenly distributed to the one or more first paths.

For example, as shown in FIG. 5A, the plurality of data blocks are distributed to paths 1 to 8. With reference to related descriptions in FIG. 5A, the check blocks are distributed to paths 9 and 10. In addition, a check block transmitted on the path 9 and a check block transmitted on the path 10 may be the same. In other words, the same check block may be transmitted on the path 9 and the path 10. When one of the paths is faulty, the check block may be successfully transmitted through the other path, to avoid a case in which the check block is lost. Certainly, a check block transmitted on the path 9 and a check block transmitted on the path 10 may alternatively be different. This may be specifically adjusted according to an actual application scenario. This is not limited in this application. Similarly, as shown in FIG. 5B, the data blocks are transmitted on paths 1 to 20, and the check blocks are distributed to paths 21 and 22. In addition, during transmission of the check blocks, second alignment code blocks (OH code blocks on paths 9 and 10 shown in FIG. 5A or on paths 21 and 22 shown in FIG. 5B) are inserted at intervals of a preset quantity of data blocks to align the check blocks.

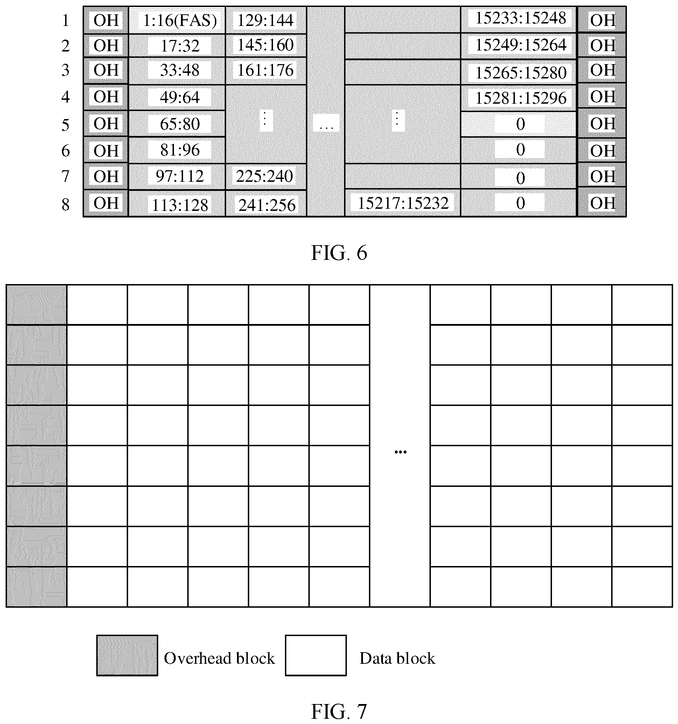

In a case, if the plurality of data blocks obtained after the splitting cannot be evenly distributed to the plurality of first paths, the transmit device may generate a padding block. The padding block may be filled with content indicating that data is not included. As shown in FIG. 6, the data blocks obtained after the splitting cannot be evenly distributed to eight paths. In this case, a padding block whose value is 0 may be generated, and the padding block is added to the paths 5 to 8, to fill a volume of data on the paths 5 to 8.

The foregoing steps 301 to 304 are splitting the received first data flow by the transmit device. The foregoing steps 301 to 304 may be replaced with the following steps 3011 to 3044. The following describes steps 3011 to 3044.

3011: The transmit device receives a 66B data flow.

The 66B data flow (that is, a second data flow) is formed in a unit of a data block with a length of 66B.

Certainly, the 66B data flow herein may also be replaced with a 257B data flow, a 513B data flow, or the like. This may be specifically adjusted according to an actual application scenario. For example, in a FlexE scenario, the data flow received by the transmit device is formed in a unit of 66B. A structure of a FlexE frame may be shown in FIG. 7. The FlexE frame may include an overhead block and a data block. The data block may carry a payload that needs to be transmitted. The overhead block may carry information such as a switch request (calendar switch request, CR), a switch acknowledgement (calendar switch acknowledge, CA), an overhead multiframe indicator (overhead multiframe indicator, OMF), a FlexE instance number, or a FlexE group number.

3022: The transmit device extracts a plurality of 66B code blocks from the second data flow.

The second data flow is a data flow formed in a unit of a data block with a length of 66B. Therefore, the transmit device may directly extract the plurality of 66B code blocks from the second data flow, and the transmit device does not need to split one FlexE frame.

One 66B code block is one data block.

3033: The transmit device generates check information based on the plurality of 66B code blocks.

For step 3033, refer to related descriptions of step 202. Details are not described herein again. A difference is that the data block is replaced with the 66B code block in this embodiment.

3044: The transmit device distributes the plurality of 66B code blocks to a plurality of first paths, and inserts first alignment code blocks at intervals of a plurality of 66B code blocks.

After obtaining the plurality of 66 code blocks, the transmit device distributes the plurality of 66B code blocks to the plurality of first paths, and inserts the one or more first alignment code blocks at intervals of a preset quantity of 66B code blocks on each first path. For example, the first alignment code blocks may be inserted at intervals of 1023^{∗}20 66B code blocks on each first path.

In a possible scenario, a quantity of 66B code blocks obtained by the transmit device in specific duration cannot be evenly distributed to the plurality of first paths. A padding block may be inserted to the one or more first paths, so that quantities of 66B code blocks transmitted on the first paths are the same. Alternatively, to implement rate adaptation, a padding block is inserted to the one or more first paths, so that a quantity of transmitted 66B code blocks is adapted to a rate in a communications network.

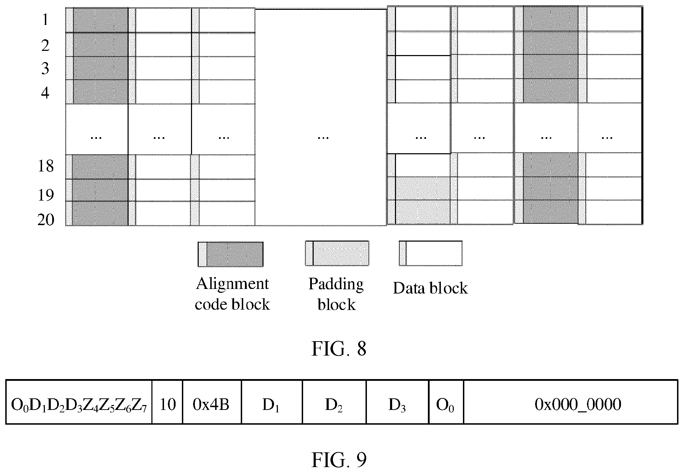

For example, a specific distribution manner of the 66B code blocks may be shown in FIG. 8. The 66B code blocks are distributed to 20 paths. In addition, the first alignment code blocks (that is, alignment code blocks on paths 1 to 20 shown in FIG. 8) are inserted on each path at intervals of a plurality of 66B code blocks. In this way, the receive device can align the plurality of 66B code blocks based on the received first alignment code blocks. A padding block is inserted to paths 19 and 20, to fill a volume of data transmitted on the paths 19 and 20, thereby evenly distributing data transmitted on the paths or implementing adaptation between a quantity of transmitted 66B code blocks and a rate in a communications network. The padding block is optional. When the plurality of 66B code blocks can be evenly distributed to the plurality of paths, the padding block does not need to be transmitted on the path.

For example, a specific format of the first alignment code block may be shown in FIG. 9. A length of the alignment code block is the same as a length of a transmitted data block. For example, if a 66B code block is transmitted in this embodiment, the length of the first alignment code block is also 66B. Herein, O0 and 0x4b jointly indicate that a type of the code block is a newly added code block used for alignment; Z4, Z5, Z6, and Z7 are preset fixed values (for example, Z4, Z5, Z6, and Z7 may be set to 0 according to definitions in related standards); and D1, D2, and D3 are used to identify a type of to-be-transmitted data, and may be set to different values according to different types of transmitted data. In addition, the first alignment code block may further include more data. For details, refer to content included in the overhead block in step 3011.

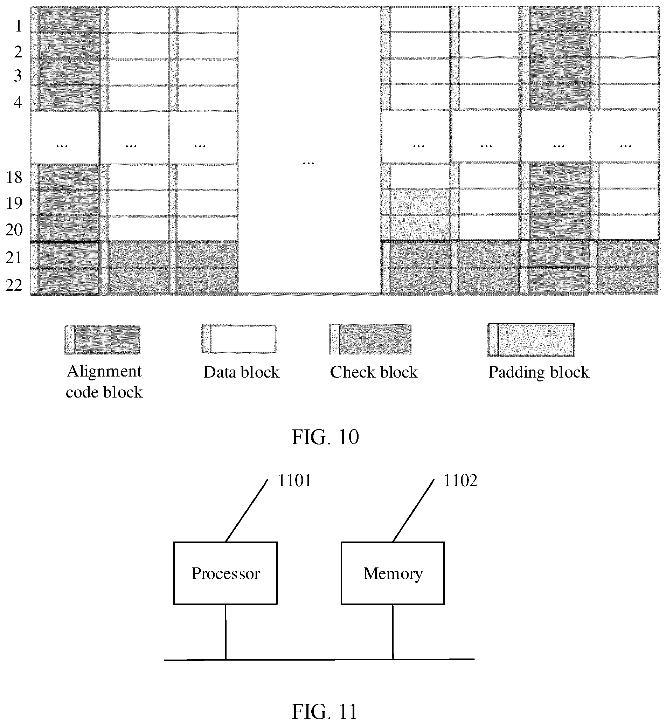

In addition, the check information may include a plurality of check blocks. A distribution manner of the plurality of check blocks is similar to the distribution manner described in step 304. As shown in FIG. 10, for the distribution manner of the padding block and the 66B code block, refer to the related descriptions in FIG. 8. The check blocks may be distributed to paths 21 and 22. One or more alignment code blocks (that is, the second alignment code blocks) are inserted on the paths 21 and 22 at intervals of a preset quantity of check blocks, to align the check blocks. Therefore, the receive device can align the check blocks by using the alignment code blocks transmitted on the paths 21 and 22.

305: The transmit device sends the plurality of data blocks, the check information, and the plurality of first alignment code blocks to the receive device.

Based on the plurality of data blocks, the plurality of first alignment code blocks, and the check information that are distributed to the corresponding paths in step 304 or step 3044, the plurality of data blocks, the plurality of first alignment code blocks, and the check information are respectively mapped to the corresponding paths and corresponding slots for transmission.

306: The receive device receives reception data and the check information.

307: The receive device aligns the reception data based on the plurality of first alignment code blocks, and obtains the plurality of data blocks.

For steps 306 and 307, refer to related descriptions of steps 204 and 205. Details are not described herein again.

In addition, when the check information and the plurality of data blocks are sent to the receive device through different paths, the receive device may align the data blocks and the check blocks with reference to the first alignment code blocks and the second alignment code blocks. For example, as described in FIG. 5A, FIG. 5B, FIG. 8, or FIG. 10, the first alignment code blocks and the second alignment code blocks are inserted at intervals of the same quantity of blocks. Therefore, the data blocks and the check blocks can be aligned in a matrix alignment manner.

308: The receive data determines whether a data loss exists. If the data loss exists, step 309 is performed. If the data loss does not exist, step 310 is performed.

Specifically, a manner in which the receive device determines whether the data loss occurs includes but is not limited to: The receive device detects alarm information such as a loss of synchronous (loss of synchronous, LOS)/loss of frame (loss of frame, LOF)/loss of multiframe (loss of multiframe, LOM). A CRC check performed on the reception data by the receive device fails. Sequence numbers of cells received by the receive device are discontinuous. The receive device may further perform a check based on the received check information to determine whether the data loss exists.

309: The receive device restores the plurality of data blocks based on the check information to obtain the restored data.

After determining that the data loss exists, the receive device performs data restoration by using the check information and the received data blocks to obtain the plurality of complete data blocks.

Specifically, if the transmit device performs calculation on the plurality of data blocks based on a preset algorithm, the receive device may obtain the lost data block through an inverse operation of the preset algorithm with reference to the received data blocks and the check information. For example, the transmit device performs an exclusive OR operation on the data blocks to obtain the check information. In this case, the receive device may perform an exclusive NOR operation based on the check information and the received data blocks to obtain the lost data block. For another example, the transmit device performs RS coding on the data blocks, and a coding matrix is a Cauchy matrix. A vector formed by the data blocks is multiplied by a generator matrix, to obtain the check information. When one of the data blocks is lost, the receive device may delete a row corresponding to the lost data block from the coding matrix, then obtain an inverse matrix of the coding matrix, and multiply the inverse matrix by the received data blocks and the check blocks to obtain the lost data block. Therefore, even if the data loss exists in the data received by the receive device, the receive device may restore the data blocks based on the received check information to obtain the complete data blocks.

310: The receive device performs another step.

When the receive device determines that the data loss does not exist in the received data, the receive device does not need to restore the data blocks, and continues to perform another step. The another step may include: The receive device forwards the plurality of received data blocks to a downstream node in a network; or the receive device performs corresponding operations and the like based on information carried in the plurality of received data blocks.

In an implementation of this application, the transmit device inserts the first alignment code blocks to each first path, so that the receive device can align the plurality of data blocks by using the first alignment code blocks. When the transmit device distributes the data blocks to each path, the transmit device does not need to consider flipping of a frame header, to reduce processing complexity of the transmit device. In addition, the receive device does not need to identify the frame header on each path, and only needs to identify the first alignment code blocks, to align the plurality of data blocks, thereby improving working efficiency of the receive device. In addition, the data blocks may be transmitted between the transmit device and the receive device through the plurality of first paths. Even if some links between the transmit device and the receive device are faulty, the receive device may also normally send the data blocks and the check information through other paths, to restore the plurality of data blocks and obtain the plurality of restored data blocks. In this way, interruption in data transmission is avoided, and working efficiency of the receive device is improved.

With reference to the method corresponding to FIG. 2 to FIG. 10, the following describes the apparatus provided in this application.

FIG. 11 is a schematic diagram of a structure of a transmit device according to this application. The transmit device may include a processor 1101 and a memory 1102. The processor 1101 and the memory 1102 are interconnected through a line. The memory 1102 stores program instructions and data.

The memory 1102 stores the program instructions and the data corresponding to the steps performed by the transmit device in FIG. 2, and FIG. 3A and FIG. 3B. The processor 1101 is configured to perform the steps performed by the transmit device shown in any one of the foregoing embodiments in FIG. 2, and FIG. 3A and FIG. 3B.

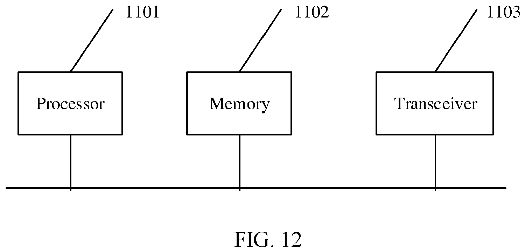

Optionally, as shown in FIG. 12, the transmit device may further include a transceiver 1103.

The transceiver 1103 is configured to perform the data transmission/reception steps performed by the transmit device shown in FIG. 2, and FIG. 3A and FIG. 3B. Specifically, the transceiver 1103 sends received data to the processor 1101, or sends data sent from the processor 1101.

In FIG. 2, the processor 1101 may be configured to perform steps 201 and 202. In FIG. 3A and FIG. 3B, the processor 1101 is configured to perform steps 302, 303, and 304; or 3022, 3033, and 3044. In FIG. 2, the transceiver 1103 may be configured to perform step 203. In FIG. 3A and FIG. 3B, the transceiver 1103 is configured to perform steps 301, 3011, and 305.

In another possible implementation, FIG. 11 and FIG. 12 may alternatively be a diagram of an example structure of the receive device.

The receive device shown in FIG. 11 may include a processor 1101 and a memory 1102. The processor 1101 and the memory 1102 are interconnected through a line. The memory 1102 stores program instructions and data. The processor 1101 is configured to perform the steps performed by the receive device shown in any one of the embodiments in FIG. 2, and FIG. 3A and FIG. 3B.

Optionally, as shown in FIG. 12, the receive device may further include a transceiver 1103.

The transceiver 1103 is configured to perform the data transmission/reception steps performed by the receive device shown in FIG. 2, and FIG. 3A and FIG. 3B.

Further, the following describes steps performed by the processor 1101 and the transceiver 1103. In FIG. 2, the processor 1101 may be configured to perform step 205. In FIG. 3Aand FIG. 3B, the processor 1101 is configured to perform steps 307, 308, 309, and 310. In FIG. 2, the transceiver 1103 may be configured to perform step 204. In FIG. 3A and FIG. 3B, the transceiver 1103 is configured to perform step 306.

An embodiment of this application further provides a digital processing chip. A circuit and one or more interfaces that are configured to implement the processor 1101 or a function of the processor 1101 are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through an interface. The digital processing chip implements, based on the program code stored in the external memory, an action performed by the transmit device or the receive device in the foregoing embodiment.

A person of ordinary skill in the art may understand that all or some of the steps of the foregoing embodiments may be implemented by using hardware or by a program instructing related hardware. The program may be stored in a computer-readable storage medium. The storage medium may be a read-only memory, a random access memory, or the like. Specifically, for example, the foregoing processing unit or processor may be a central processing unit, a general-purpose processor, a digital signal processor (DSP), an application-specific integrated circuit (ASIC), a field programmable gate array (FPGA) or another programmable logic device, a transistor logic device, a hardware component, or any combination thereof. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement the embodiments, the method steps in the foregoing embodiments may be implemented completely or partially in a form of a computer program product. The computer program product includes one or more computer instructions. When the computer program instructions are loaded and executed on a computer, all or some of the procedures or functions according to the embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium, or the like.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
obtaining, by a transmit device, a plurality of data blocks;
generating, by the transmit device, check information based on the plurality of data blocks; and
sending, by the transmit device, the plurality of data blocks, the check information, and a plurality of first alignment code blocks to a receive device, wherein the plurality of data blocks are distributed to a plurality of first paths, the check information is used to restore the plurality of data blocks, and the plurality of first alignment code blocks are used to align the plurality of data blocks.

2. The method according to claim 1, wherein the sending, by the transmit device, a plurality of first alignment code blocks to a receive device comprises: sending, by the transmit device, the first alignment code blocks at intervals of a preset quantity of data blocks on each of the plurality of first paths.

3. The method according to claim 2, wherein the sending, by the transmit device, the first alignment code blocks at intervals of a preset quantity of data blocks on each of the plurality of first paths comprises: sending, by the transmit device, the first alignment code blocks at intervals of data blocks corresponding to one or more frames on each of the plurality of first paths.

4. The method according to any one of claims 1 to 3, wherein the obtaining, by a transmit device, a plurality of data blocks comprises:
receiving, by the transmit device, a first data flow, wherein a format of the first data flow is an optical channel data unit ODU frame format, a synchronous digital hierarchy SDH frame format, or a passive optical network PON frame format; and
splitting, by the transmit device, the received first data flow to obtain the plurality of data blocks, wherein each of the plurality of data blocks has the same length.

5. The method according to any one of claims 1 to 3, wherein the obtaining, by a transmit device, a plurality of data blocks comprises: receiving, by the transmit device, a second data flow, wherein the second data flow comprises the plurality of data blocks, and each of the plurality of data blocks has the same length.

6. The method according to claim 4 or 5, wherein a length of each of the plurality of data blocks is 16 bytes B, 32B, 64B, 128B, 192B, 256B, 384B, 66B, 257B, or 513B.

7. The method according to any one of claims 4 to 6, wherein the method further comprises:
generating, by the transmit device, at least one padding block; and
adding, by the transmit device, the at least one padding block to the plurality of data blocks.

8. The method according to any one of claims 1 to 7, wherein the sending, by the transmit device, the check information to a receive device comprises:
sending, by the transmit device, the check information to the receive device through at least one of the plurality of first paths; or
sending, by the transmit device, the check information to the receive device through at least one second path.

9. The method according to claim 8, wherein the method further comprises:
if the transmit device sends the check information to the receive device through the at least one of the plurality of first paths, sending, by the transmit device, at least one second alignment code block to the receive device through the at least one first path; or
if the transmit device sends the check information to the receive device through the at least one second path, sending, by the transmit device, at least one second alignment code block to the receive device through each of the at least one second path, wherein the at least one second alignment code block is used to align the check information.

10. A data transmission method, comprising:
receiving, by a receive device, reception data and check information that are sent by a transmit device, wherein the reception data comprises a plurality of first alignment code blocks; and
obtaining, by the receive device, a plurality of data blocks from the reception data based on the plurality of first alignment code blocks, wherein the check information is used to restore the plurality of data blocks.

11. The method according to claim 10, wherein the method further comprises:
if the receive device determines that a data loss exists in the plurality of data blocks, restoring, by the receive device, the plurality of data blocks based on the check information to obtain restored data.

12. The method according to claim 10 or 11, wherein the reception data is sent by the transmit device through a plurality of first paths, and the first alignment code blocks are transmitted at intervals of a preset quantity of data blocks on each of the plurality of first paths.

13. The method according to claim 12, wherein the first alignment code blocks are transmitted at intervals of data blocks corresponding to one or more frames on each of the plurality of first paths.

14. The method according to any one of claims 10 to 13, wherein the plurality of data blocks are obtained by the transmit device through splitting a received first data flow, and a format of the first data flow is an ODU frame format, an SDH frame format, or a PON frame format.

15. The method according to any one of claims 10 to 13, wherein the plurality of data blocks are obtained by the transmit device based on a received second data flow, and the second data flow comprises the plurality of data blocks.

16. The method according to any one of claims 10 to 15, wherein a length of each of the plurality of data blocks is 16B, 32B, 64B, 128B, 192B, 256B, 384B, 66B, 257B, or 513B.

17. The method according to any one of claims 10 to 16, wherein the method further comprises:
determining, by the receive device, a padding block from the reception data, wherein the padding block is used to fill a volume of data transmitted on the plurality of first paths.

18. The method according to any one of claims 10 to 16, wherein the receiving, by a receive device, check information sent by a transmit device comprises:
receiving, by the receive device, the check information through at least one of the plurality of first paths or at least one second path; and
aligning, by the receive device, the check information by using at least one second alignment code block to obtain the check information.

19. The method according to claim 18, wherein the method further comprises:
if the receive device receives the check information through the at least one of the plurality of first paths, receiving, by the receive device, the at least one second alignment code block through at least one of the plurality of first paths; or
if the receive device receives the check information through the at least one second path, receiving, by the receive device, the at least one second alignment code block through the at least one second path.

20. A transmit device, comprising a processor and a memory, wherein
the memory and the processor are interconnected through a line, the memory stores instructions, and the processor is configured to perform the data transmission method according to any one of claims 1 to 9.

21. A receive device, comprising a processor and a memory, wherein
the memory and the processor are interconnected through a line, the memory stores instructions, and the processor is configured to perform the data transmission method according to any one of claims 10 to 19.
